# EUROPEAN PATENT SPECIFICATION

(11) **EP 3 309 858 B1**
(45) Date of publication and mention of the grant of the patent: **10.07.2019**
(21) Application number: 16193713.1
(22) Date of filing: 13.10.2016
(51) Int. Cl.: H01M 2/10, H01M 10/60

(54) **BATTERY MODULE CARRIER, BATTERY SYSTEM AND USE OF A MODIFIED H-BEAM AS BATTERY MODULE CARRIER**
BATTERIEMODULTRÄGER, BATTERIESYSTEM UND VERWENDUNG EINES MODIFIZIERTEN H-TRÄGERS ALS BATTERIEMODULTRÄGER
SUPPORT DE MODULE DE BATTERIE, SYSTÈME DE BATTERIE ET UTILISATION D'UN PROFILÉ H MODIFIÉ COMME SUPPORT DE BATTERIE

(43) Date of publication of application: 18.04.2018
(73) Proprietor: Samsung SDI Co., Ltd., Giheung-gu Yongin-si, Gyeonggi-do 17084 (KR)
(72) Inventor: Klomberg, Stephan, 8042 Graz (AT)
(74) Representative: Gulde & Partner

(56) References cited:
- DE-A1-102012 218 082
- KR-U- 20110 001 936

## Description

### Field of the Invention

The present invention relates to battery module carrier, a battery system and the use of a modified H-beam as battery module carrier.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed in a block design or in a modular design. In the block design each battery is coupled to one common current collector structure and battery management system and the unit thereof is arranged in a housing. In the modular design a plurality of battery cells is connected to submodules and several submodules are connected to form the module. In the modular design different battery management functions can be realized on module or submodule level, which is favorable e.g. in terms of interchangeability. To form a battery system on or more battery modules must be mechanically and electrically integrated, equipped with a thermal management system and set up for communication with on or more electrical consumers. Further, a battery system comprises a battery management unit (BMU) and a battery disconnect unit (BDU).

For the electrical integration in a modular design either submodules with a plurality of cells connected in parallel are connected in series (*XsYp*) or submodules with a plurality of cells connected in series are connected in parallel (*XpYs*). *XsYp* type submodules can generate high voltages but the voltage level of each individual cell hast to be controlled individually. Thus, wiring complexity is high in *XsYp* type submodules. In *XpYs* type submodules the voltage levels of the cells connected in parallel are automatically balanced and thus it is sufficient to control the voltage on submodule level. Thus, wiring complexity is reduced in *XpYs* type submodules. In submodules of cells connected in parallel their capacitance add up and thus *XpYs* type submodules are mostly used for low capacitance cells.

The thermal management system is required to safely use the battery module by efficiently emitting, discharging and/or dissipating heat generated from the rechargeable batteries. If the heat emission/discharge/dissipation is not sufficiently performed, temperature deviations occur between respective battery cells, such that the battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cooling devices for effectively emitting/discharging/dissipating heat from the cells is required.

For meeting the dynamic power demands of various electrical consumers connected to the battery system a static control of battery power output and charging is not sufficient. Thus, a steady exchange of information between the battery system and the controllers of the electrical consumers is required. Important information includes the battery systems actual state of charge (SoC), potential electrical performance, charging ability and internal resistance as well as actual or predicted power demands or surpluses of the consumers.

The mechanical integration requires appropriate mechanical connection of the individual components among themselves and to a structure of the system providing the electrical consumers, e.g. a vehicle. These connections must be designed to remain functional and save during the average service life of the battery system and under the stresses provided during use of e.g. the vehicle. At the same time installation space and interchangeability requirements must be met, especially in mobile applications.

Mechanical integration of battery modules can be achieved by providing a carrier plate, e.g. ground plate, and by positioning individual battery cells or submodules thereon. Fixing the battery cells or submodules can be achieved by fitted depressions in the carrier plate, by mechanical interconnectors as bolts or screws or by confining the cells or submodules. Confinement can be achieved by fastening side plates to lateral sides of the carrier plate and/or by providing a further carrier plate atop and fixing it to the first carrier plate and/or side plates. Thus, multilevel battery modules can be constructed, wherein the carrier plates and/or side plates may contain coolant ducts for providing cooling of the cells or submodules.

Mechanical integration of the battery submodules can be achieved by using mechanically reinforced electrical connectors or by fastening the battery cells onto carrier beams or struts additionally to the electrical connectors. Additionally or alternatively the submodules can be arranged in individual casings covering some or all of the surfaces of the battery submodule and arranged into a battery module, e.g. onto a carrier plate, within these individual casings.

Battery modules or battery systems according to the prior art require a plurality of custom designed parts such as carrier plates, side plates, carrier beams and the like. In order to achieve a sufficient mechanical integration a plurality of connection means is required for connecting the different parts. As a consequence battery modules according to the prior art usually have a high resulting weight, a high complexity and require a lot of installation space.

It is thus an object of the present invention to overcome or reduce at least some of the drawbacks of the prior art and to provide a battery module carrier that allows for a simple and lightweight battery system with a reduced installation space requirement.

### Summary of the Invention

Further aspects of the present invention will be apparent from the dependent claims, the attached drawings and/or the following description of the attached drawings.

According to a first aspect of the present invention, a battery module carrier is provided, comprising a modified H-beam with an upper flange, a web and a lower flange as a main component. In other words, the battery module carrier according to the present invention consists of the modified H-beam. The modifications of the H-beam comprise at least one first coolant hollow arranged in the upper flange and extending across the whole length of the upper flange, i.e. in a longitudinal direction of the H-beam, and at least one second coolant hollow arranged in the web and extending across the whole length of the web, i.e. in a longitudinal direction of the H-beam. By providing such coolant hollows, i.e. hollows within the H-beam that are fluid tight for a suitable coolant and through which the suitable coolant can flow along the whole length of the H-beam, the H-beam is suitable to be used as a battery module carrier. It has been found by the inventors, that such modified H-beams are easily produced and provide the load capacity and surface area for assembling multiple battery modules thereto space efficiently. The coolant hollows can further comprise coolant ducts disposed in the coolant hollows and from the same or a different material than the H-beam.

In a preferred embodiment of the present invention, the battery module carrier comprises at least one third coolant hollow arranged in the lower flange and extending across the whole length of the lower flange, i.e. in a longitudinal direction of the H-beam. Thus, heat transport away from battery modules attached to the battery module carrier is even more efficient. Further, by providing coolant hollows in the upper flange, the web and the lower flange, the weight of the modified H-beam is advantageously further reduced. In general, the upper flange and the lower flange are at least essentially plane-parallel and connected by the web that extends in a direction essentially parallel to a normal vector of each of the upper flange and lower flange, i.e. in a height direction of the H-beam. Preferably, the upper flange and the lower flange are at least essentially congruent in size and further preferred the web divides each of the lower flange and the upper flange in essentially two equal halves.

In a preferred embodiment, the upper flange comprises at least one upper through hole fluidly connected to the at least one first coolant hollow. In other words, the upper flange comprises an opening that extends across the whole height of the upper flange, i.e. from a first surface of the upper flange to a second surface, opposing the first surface, of the upper flange. The at least one upper through hole is preferably configured to fluidly connect the first coolant hollow to an external coolant circuit. By contacting the first coolant hollow from above the upper flange, multiple modified H-beams can be connected in series in a longitudinal direction of the H-beam and/or arranged in a dense packing in a width direction of the H-beam, i.e. in a direction perpendicular to the longitudinal direction and to the height direction of the H-beam.

Alternatively or additionally, the lower flange comprises at least one lower through hole fluidly connected to the at least one third coolant hollow. In other words, the lower flange comprises an opening that extends across the whole height of the lower flange, i.e. from a first surface of the lower flange to a second surface, opposing the first surface, of the lower flange. The at least one lower through hole is preferably configured to fluidly connect the third coolant hollow to an external coolant circuit. In principle, the at least one lower through hole provide the same advantages as the at least one upper through hole. Further preferred, the web comprises at least one coolant port, e.g. a coolant inlet port and a coolant outlet port, configured for connecting the second coolant hollow to an external coolant circuit. Particularly, by using upper through holes in the upper flange, lower trough holes in the lower flange and a coolant port of the web, the first coolant hollow, the second coolant hollow and the third coolant hollow can be decoupled and parallel cooling can be realized. This parallel cooling is less prone to errors and interconnects between coolant hollows can be reduced to a minimum.

According to an embodiment of the battery module carrier, the second coolant hollow is fluidly connected to at least one of the first coolant hollow and the third coolant hollow. In other words, at least two of the coolant hollows can be connected to each other in way to form a single cooling channel extending through the whole modified H-beam. According to this embodiment advantageously only one at least one external coolant port for fluidly connecting the interconnected cooling hollows to an external cooling circuit has to be provided. This allows for an easy integration of the battery module carrier in a surrounding system, i.e. a vehicle, and/or dense packing of multiple battery module carriers. Particularly preferred all three coolant hollows, i.e. the first, second and third coolant hollow, are interconnected within the H-beam. Alternatively, the first and second coolant hollow or the third and second coolant hollow are interconnected, while the remaining third or first coolant hollow, respectively, comprises an individual at least one coolant port for connecting to an external coolant circuit.

The at least two interconnected coolant hollows can be fluidly connected to each other by at least one internal trough hole extending in a direction perpendicular to a longitudinal direction and perpendicular to a width direction of the H-beam, i.e. the height direction of the H-beam. The at least one internal through hole preferably connects a first internal surface, e.g. of the first cooling hollow, with a second internal surface opposing the first internal surface, e.g. of the second coolant hollow. The at least one internal through hole can be provided by assembling the modified H-beam from at least two separate parts, e.g. an upper flange and a combination of web and lower flange. Then each part comprises at least one opening on a top or a bottom surface, respectively, that extends into the respective cooling hollow and the openings superimpose in the assembled state of the H-beam. Thus, a fluid connection between the coolant hollows of the assembled parts is obtained. Alternatively, the modified H-beam can be extruded as a monolithic part using an extrusion matrix with movable elements. Alternatively, the at least two coolant hollows are fluidly connected to each other via a front plate attached to a front face and/or via an end plate attached to an end face of the H-beam.

In a further preferred embodiment of the battery module carrier according to the present invention, the upper flange and the lower flange are spaced apart in a height direction of the H-beam such that a plurality of battery modules can be disposed between the upper flange and the lower flange on both sides of the web. Further, the lower flange extends in a width direction of the H-beam such that the plurality of battery modules can be disposed on the lower flange on both sides of the web And/or a plurality of battery modules can be mounted to the lower flange from below, i.e. to a surface of the lower flange opposite to the surface contacting the web of the battery module carrier. In other words, the modified H-beam is designed and sized such that a plurality of battery modules can be disposed on the lower flange and between upper and lower flange on both side of the web, particularly preferred without protruding over one of the upper and lower flange in a width direction of the H-beam.

Also preferred the upper flange extends in a width direction of the H-beam such that an additional plurality of battery modules can be disposed on the upper flange. Thus, a high number of battery modules can be disposed on the battery module carrier in a space efficient way. Further preferred at least one of the upper flange, the lower flange and the web comprises connection means configured for receiving attachment means of a respective battery module attached thereto. In other words, the H-beam is further modified in that it is prepared for attaching or fixing a plurality of battery modules to the components thereof.

In a preferred embodiment at least one of the upper flange, the web and the lower flange is an extruded profile. According to this embodiment, the H-beam consists of at least two components that are individually manufactured by extrusion and later assembled, e.g. by welding, in order to form the modified H-beam. This embodiment advantageously allows for a simple manufacture of the components, while features as internal through holes for fluidly connecting at least two of the cooling hollows can be easily realized. Alternatively, the modified H-beam as a whole is an extruded profile. In other words, the H-beam is manufactured as a monolithic component. This provides an H-beam with improved mechanical integrity and stability, while all features can still be realized e.g. by using an adequate extrusion matrix, e.g. with components that are moveable during extrusion. Further preferred, a plurality of battery module carriers according to the present invention may be connected to each other, e.g. to from double H profiles, in order to increase the number of modules that can be attached to such package.

Another aspect of the present invention relates to a battery system, comprising a battery module carrier according to the present invention and as described above. The battery system further comprises a first plurality of battery modules that is disposed between the upper flange and the lower flange on a first side of the web and a second plurality of battery modules disposed between the upper flange and the lower flange on a second side of the web.

In a preferred embodiment, the battery system comprises a first side cover attached to at least one of the upper flange and the lower flange on the first side of the web. The attachment may be fixed, e.g. by screws or may be moveable, e.g. around a hinge connection. The first side cover is configured for covering the first plurality of battery modules. Further preferred, the battery system comprises a second side cover that is attached to at least one of the upper flange and the lower flange on the second side of the web similar to the first side cover and that is configured for covering the second plurality of battery modules. The battery system according to the invention advantageously comprises two pluralities of battery modules that are arranged space efficiently and that are cooled at least from their top surfaces via the first coolant hollow and via their side surfaces via the second coolant hollow.

Preferably, the battery system further comprises a third plurality of battery modules disposed on top of the upper flange. Thus, the amount of battery modules in the battery system can be further increased and the mechanical stability of the battery module carrier is fully utilized. Further preferred, a top cover is attached to the upper flange and covers the third plurality of battery modules. The top cover might comprise a deep-drawn sheet, e.g. a deep-drawn metal sheet that is configured to enclose the third plurality of battery modules. The deep-drawn metal sheet provides protection of the battery modules and further components and provides a large heat-exchange surface for efficiently radiating heat away from the batteries.

Further preferred, the battery system comprises a fourth plurality of battery modules mounted to the upper flange from below, i.e. to a surface of the lower flange that is opposite to the surface contacting the web. Thus, the amount of battery modules in the battery system can be further increased and the mechanical stability of the battery module carrier is fully utilized. Further preferred, a bottom cover is attached to the lower flange and covers the fourth plurality of battery modules. The bottom cover might comprise a deep-drawn sheet, e.g. a deep-drawn metal sheet that is configured to enclose the fourth plurality of battery modules.

According to a preferred embodiment, the battery system further comprises a control electronics assembly, e.g. with a battery management unit (BMU) and/or a battery disconnect unit (BDU), that is disposed between the upper flange and the lower flange on at least one side of the web. The control electronics assembly is preferably electrically and/or electronically connected to at least one of the first plurality, the second plurality, the third plurality and the fourth plurality of battery modules. An electrical connection refers to a connection configured for power transmission, while an electronical connection refers to a connection configured for signal transmission. Further preferred, the control electronics assembly comprises at least one power port, i.e. a port configured for connecting to an external power circuit and/or at least one signal port, i.e. a port configured for connection to an external control unit. According to these embodiments, the battery system of the present invention is fully integrated with respect to cooling, power transmission and signal transmission and thus space efficiently provides all functionalities required for the operation of the battery modules.

The battery system according to the present invention preferably further comprises at least one front plate attached to a front face of the H-beam and/or at least one end plate attached to an end face of the H-beam. Each of the front plate and the end plate might consist of multiple plate segments. The battery system might comprise only one of a front plate and an end plate, when multiple H-beams are arranged in series and preferably connected in series with respect to at least one of the first coolant hollow, the second coolant hollow and the third coolant hollow. The battery system might comprise a front plate and an end plate covering a front face and an end face of the H-beam, respectively, when an isolated battery module carrier is used. The front plate and the end plate might be configured for further functions next to covering the front face and the end face and protecting the battery modules, respectively.

According to a preferred embodiment, at least one of the front plate and the end plate is configured to fluidly connect at least one of the first coolant hollow, the second coolant hollow and the third coolant hollow to an external coolant circuit. In other words, at least one of the front plate and the end plate is configured to extend one of the coolant hollows in a longitudinal extension of the H-beam, to seal the respective coolant hollow in all directions other than the longitudinal direction and further comprises connection means configured to be connected to an external coolant circuit. In this embodiment, at least one of an upper through hole and a lower through hole, as previously described, can be omitted as their functionality is provided by the front plate and/or the end plate. The second coolant hollow is connected to an external cooling circuit (external coolant circuit) via the front plate and/or the end plate.

In a further preferred embodiment of the battery system according to the invention, at least one of the front plate and the end plate is configured to fluidly connect at least two of the first coolant hollow, the second coolant hollow and the third coolant hollow to each other. In other words, at least one of the front plate and the end plate is configured to extend two of the coolant hollows in a longitudinal extension of the H-beam, to redirect them in a direction perpendicular to the longitudinal direction, e.g. in a height direction of the H-beam, and to fluidly connect them with each other. A respective front plate or end plate might comprise internal coolant channels or might comprise a recess facing the front face or the end face of the H-beam, respectively, and overlapping with two coolant hollows.

In a further preferred embodiment of the battery system according to the invention, at least one of the front plate and the end plate is configured to fluid tightly enclose at least one of the first coolant hollow, the second coolant hollow and the third coolant hollow. In other words, the front plate and/or the end plate forms a seal for the coolant hollows. In this embodiment the upper flange and/or the lower flange preferably comprise the through holes for connecting the coolant hollows to an external cooling circuit as described above. In this embodiment, the sealing of the coolant hollows advantageously occurs with sufficient distance from the battery modules such that pouring of coolant liquid into the battery modules can be avoided.

According to a preferred embodiment of the battery system according to the invention at least one of the front plate and the end plate is configured to connect the at least one power port to an external power circuit. The front plate or the end plate might comprise an opening for guiding through the power port of the control electronics assembly. Alternatively, the front plate or the end plate might comprise an internal power port configured to connect to the power port of the control electronics assembly and an external power port connected to the internal power port and configured to connect to the external power circuit. Further preferred, at least one of the front plate and the end plate is configured to connect the at least one signal port to an external signal circuit. The front plate or end plate might comprise an opening for guiding through the signal port of the control electronics assembly. Alternatively, the front plate or the end plate might comprise an internal signal port configured to connect to the signal port of the control electronics assembly and an external signal port connected to the internal signal port and configured to connect to an external control unit.

Another aspect of the present invention relates to the use of a modified H-beam as a battery module carrier, the modified H-beam comprising at least one first coolant hollow arranged in the upper flange and extending across the whole length of the upper flange and at least one second coolant hollow arranged in the web and extending across the whole length of the web. The modified H-beam might further comprise the features as described above with respect to the battery module carrier according to the invention and might particularly be used in a battery system according to the invention as described above.

### Brief Description of the Drawings

Features will become apparent to those of ordinary skill in the art by describing in detail exemplary embodiments with reference to the attached drawings in which:
- Fig. 1: illustrates a perspective view of a battery system according to an embodiment; and
- Fig. 2: illustrates a cross section of a battery system according to an embodiment.

### Detailed Description of the Invention

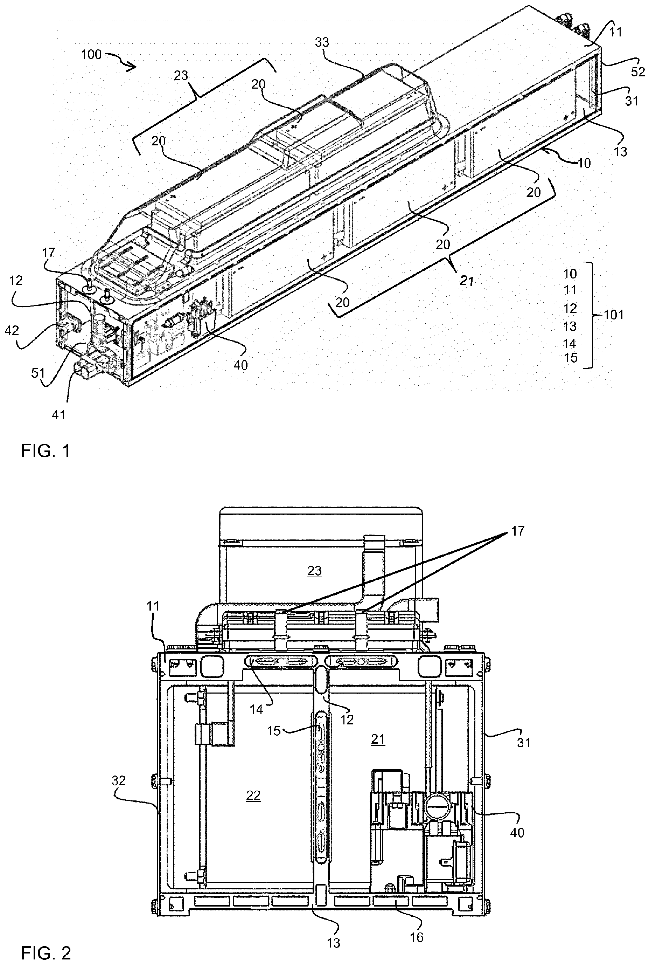

Referring to Figs. 1 and 2, an exemplary embodiment of a battery system 100 according to the present invention is illustrated. As a main component for mechanical integration the battery system 100 comprises a battery module carrier 101 having a modified H-beam 10 according to the present invention.

The modified H-beam 10 comprises an upper flange 11, a web 12 and a lower flange 13 that are connected such that a cross section of the H-beam 10 is H-shaped. As indicated in Fig. 1 and shown in Fig. 2 two first coolant hollow 14 are disposed inside the upper flange 11, one first coolant hollow 14 is on each side of the upper flange 11. As shown in Fig. 2 the web 12 comprises a second coolant hollow 15 and the lower flange 13 comprises a plurality of third coolant hollows 16. Each of the first coolant hollows 14, the second coolant hollows 15 and the third coolant hollows 16 extend across the whole length of the H-beam 10.

Two upper through holes 17 is arranged in a top surface of the upper flange 11 and extend through the upper flange 11. Each one of the upper through holes 17 are fluidly connected to one of the first coolant hollows 14 and are configured to connect the respective first coolant hollow 14 to an external cooling circuit (not shown). The first coolant hollows 14 are fluidly connected to the second coolant hollows 15 via an end cap 52 attached to an end surface of the H-beam 10. The end cap 52 comprises a coolant connecting channel (not shown) connected to each of the first coolant hollows 14 and to the second coolant hollow 15. The second coolant hollow 15 is fluidly connected to the third coolant hollows 16 via a front plate 51 attached to a front surface of the H-beam. The front plate 51 comprises a plurality of coolant connecting channels (not shown) connected to the second coolant hollow 15 and to each of the third coolant hollows 16.

A first plurality 21 of three battery modules 20 is disposed on the lower flange 13 and between the upper flange 11 and the lower flange 13 on a first side of the web 12. A second plurality 22 of four battery modules 20 is disposed on the lower flange 13 and between the upper flange 11 and the lower flange 13 on a second side of the web 12. The first plurality 21 of battery modules 20 is covered by a first side cover 31 attached to the upper flange 11 and the lower flange 13 via screws and the second plurality 22 of battery modules 20 is covered by a second side cover 32 attached to the upper flange 11 and the lower flange 13 via screws. A third plurality 23 of two battery modules 20 is disposed on the top surface of the upper flange 11 and is covered by a deep-drawn metal sheet as a top cover 33 attached to the upper flange 11 via screws.

A control electronics assembly 40 is disposed on the lower flange 13 near its front surface and on one side of the web 12 and is covered by the first side cover 31. The electronics assembly 40 is thus fully enclosed by the web 12, the first side cover 31 and the front plate 51. The control electronics assembly 40 is electrically and electronically connected to each of the first plurality 21, the second plurality 22 and the third plurality 23 of battery modules 20. The control electronics assembly 40 comprises a battery management unit (BMU) and a battery disconnect unit (BDU). The control electronics assembly 40 further comprises a power port 41 that is guided through an opening in the front plate 51 in order to be connected to an external power circuit (not shown). The control electronics assembly 40 further comprises a signal port 42 that is guided through an opening in the front plate 51 in order to be connected to an external signal circuit (not shown) and/or an external control unit (not shown).

### Reference signs

- 10: modified H-beam
- 11: upper flange
- 12: web
- 13: lower flange
- 14: first coolant hollow
- 15: second coolant hollow
- 16: third coolant hollow
- 17: upper through hole

- 20: battery module
- 21: first plurality of battery modules
- 22: second plurality of battery modules
- 23: third plurality of battery modules

- 31: first side cover
- 32: second side cover
- 33: top cover

- 40: control electronics assembly
- 41: power port
- 42: signal port

- 51: front plate
- 52: end plate

- 100: battery system
- 101: battery module carrier

## Claims

1. Battery module carrier (101), comprising
a modified H-beam (10) with an upper flange (11), a web (12) and a lower flange (13);
at least one first coolant hollow (14) arranged in the upper flange (11) and extending across the whole length of the upper flange (11) in a longitudinal direction of the H-beam (10); and
at least one second coolant hollow (15) arranged in the web (12) and extending across the whole length of the web (12) in a longitudinal direction of the H-beam (10).

2. Battery module carrier (101) according to claim 1, further comprising
at least one third coolant hollow (16) arranged in the lower flange (13) and extending across the whole length of the lower flange (13).

3. Battery module carrier (101) according to claim 1 or claim 2,
wherein the upper flange (11) comprises at least one upper through hole (17) fluidly connected to the at least one first coolant hollow (14); and/or
wherein the lower flange (13) comprises at least one lower through hole fluidly connected to the at least one third coolant hollow (16).

4. Battery module carrier (101) according to any one of the preceding claims,
wherein the second coolant hollow (15) is fluidly connected to at least one of the first coolant hollow (14) and the third coolant hollow (16).

5. Battery module carrier (101) according to any one of the claims 2 to 4,
wherein the web (12) comprises at least one coolant port configured for connecting the second coolant hollow (15) to an outer coolant circuit.

6. Battery module carrier (101) according to any one of the preceding claims,
wherein the upper flange (11) and the lower flange (13) are spaced apart in a height direction of the H-beam (10) such that a plurality of battery modules (20) can be disposed between the upper flange (11) and the lower flange (13) on both sides of the web (12).

7. Battery module carrier (101) according to any one of the preceding claims, wherein at least one of the upper flange (11), the web (12) and the lower flange (13) or the modified H-beam (10) is an extruded aluminum profile.

8. Battery system (100), comprising
a battery module carrier (101) according to any one of the claims 1 to 7;
a first plurality (21) of battery modules (20) disposed between the upper flange (11) and the lower flange (13) on a first side of the web (12); and
a second plurality (22) of battery modules (20) disposed between the upper flange (11) and the lower flange (13) on a second side of the web (12).

9. Battery system (100) according to claim 8, further comprising
a first side cover (31) attached to the upper flange (11) and/or the lower flange (13) on the first side of the web (12) and covering the first plurality (21) of battery modules (20); and
a second side cover (32) attached to the upper flange (11) and/or the lower flange (13) on the second side of the web (12) and covering the second plurality (22) of battery modules (20).

10. Battery system (100) according to claim 8 or 9, further comprising
a third plurality (23) of battery modules (20) disposed on top of the upper flange (11); and
a top cover (33) attached to the upper flange (11) and covering the third plurality (23) of battery modules (20).

11. Battery system (100) according to any one of the claims 8 to 10, further comprising
a fourth plurality of battery modules (20) mounted to the lower flange (13) from below; and
a bottom cover attached to the lower flange (13) from below and covering the fourth plurality of battery modules (20).

12. Battery system (100) according to any one of the claims 8 to 11, further comprising
a control electronics assembly (40) disposed between the upper flange (11) and the lower flange (13) on at least one side of the web (12);
wherein the control electronics assembly (40) is electrically and/or electronically connected to at least one of the first plurality (21), the second plurality (22), the third plurality (23) and the fourth plurality of battery modules (20), and
wherein the control electronics assembly (40) comprises at least one power port (41) and/or at least one signal port (42).

13. Battery system (100) according to any one of the claims 8 to 12, further comprising
at least one front plate (51) attached to a front face of the H-beam (10); and/or
at least one end plate (52) attached to an end face of the H-beam (10).

14. Battery system (100) according to claim 13,
wherein at least one of the front plate (51) and the end plate (52) is configured to fluidly connect at least one of the first coolant hollow (14), the second coolant hollow (15) and the third coolant hollow (16) to an external coolant circuit;
wherein at least one of the front plate (51) and the end plate (52) is configured to fluidly connect at least two of the first coolant hollow (14), the second coolant hollow (15) and the third coolant hollow (16) to each other; and/or
wherein at least one of the front plate (51) and the end plate (52) is configured to fluid tightly enclose at least one of the first coolant hollow (14), the second coolant hollow (15) and the third coolant hollow (16).

15. Use of a modified H-beam (10) as a battery module carrier (101), the modified H-beam (10) comprising at least one first coolant hollow (14) arranged in the upper flange (11) and extending across the whole length of the upper flange (11) in a longitudinal direction of the H-beam (10); and at least one second coolant hollow (15) arranged in the web (12) and extending across the whole length of the web (12) in a longitudinal direction of the H-beam (10).

## Patentansprüche

1. Batteriemodulträger (101), umfassend:
einen modifizierten Doppel-T-Träger (10) mit einem oberen Flansch (11), einem Steg (12) und einem unteren Flansch (13);
wenigstens eine erste Kühlaussparung (14), die in dem oberen Flansch (11) angeordnet ist und sich über die gesamte Länge des oberen Flansches (11) in einer Längsrichtung des Doppel-T-Trägers (10) erstreckt; und
wenigstens eine zweite Kühlaussparung (15), die im Steg (12) angeordnet ist und sich über die gesamte Länge des Stegs (12) in einer Längsrichtung des Doppel-T-Trägers (10) erstreckt.

2. Batteriemodulträger (101) nach Anspruch 1, weiterhin umfassend:
wenigstens eine dritte Kühlaussparung (16), die in dem unteren Flansch (13) angeordnet ist und sich über die gesamte Länge des unteren Flansches (13) erstreckt.

3. Batteriemodulträger (101) nach Anspruch 1 oder Anspruch 2,
wobei der obere Flansch (11) wenigstens eine obere Durchgangsbohrung (17) umfasst, die fluidisch an die wenigstens eine erste Kühlaussparung (14) angeschlossen ist; und/oder
wobei der untere Flansch (13) wenigstes eine untere Durchgangsbohrung umfasst, die fluidisch an die wenigstens eine dritte Durchgangsbohrung (16) angeschlossen ist.

4. Batteriemodulträger (101) nach irgendeinem der voranstehenden Ansprüche,
wobei die zweite Kühlaussparung (15) fluidisch an wenigstens eine erste Kühlaussparung (14) und die dritte Kühlaussparung (16) angeschlossen ist.

5. Batteriemodulträger (101) nach irgendeinem der Ansprüche 2 bis 4,
wobei der Steg (12) wenigstens einen Kühlport umfasst, der zum Anschließen der zweiten Kühlaussparung (15) an den äußeren Kühlkreislauf konfiguriert ist.

6. Batteriemodulträger (101) nach irgendeinem der voranstehenden Ansprüche,
wobei der obere Flansch (11) und der untere Flansch (13) in einer Höhenrichtung des Doppel-T-Trägers (10) derart beabstandet sind, dass mehrere Batteriemodule (20) zwischen dem oberen Flansch (11) und dem unteren Flansch (13) auf beiden Seiten des Stegs (12) angeordnet sein können.

7. Batteriemodulträger (101) nach irgendeinem der voranstehenden Ansprüche, wobei wenigstens einer von dem oberen Flansch (11), dem Steg (12) oder dem unteren Flansch (13) oder dem modifizierten Doppel-T-Träger (10) ein stranggepresstes Aluminiumprofil ist.

8. Batteriesystem (100), umfassend:
einen Batteriemodulträger (101) nach irgendeinem der Ansprüche 1 bis 7;
eine erste Vielzahl (21) von Batteriemodulen (20), die zwischen dem oberen Flansch (11) und dem unteren Flansch (13) auf einer ersten Seite des Stegs (12) angeordnet sind; und
eine zweite Vielzahl (22) von Batteriemodulen (20), die zwischen dem oberen Flansch (11) und dem unteren Flansch (13) auf einer zweiten Seite des Stegs (12) angeordnet sind.

9. Batteriesystem (100) nach Anspruch 8, weiterhin umfassend:
eine erste Seitenabdeckung (31), die an dem oberen Flansch (11) und/oder dem unteren Flansch (13) auf der ersten Seite des Stegs (12) angeordnet ist und die erste Vielzahl (21) von Batteriemodulen (20) abdeckt; und
eine zweite Seitenabdeckung (32), die an dem oberen Flansch (11) und/oder dem unteren Flansch (13) auf der zweiten Seite des Stegs (12) befestigt ist und die zweite Vielzahl (22) von Batteriemodulen (20) abdeckt.

10. Batteriesystem (100) nach Anspruch 8 oder 9, weiterhin umfassend:
eine dritte Vielzahl (23) von Batteriemodulen (20), die auf der Oberseite des oberen Flansches (11) angeordnet sind; und
eine obere Abdeckung (33), die an dem oberen Flansch (11) befestigt ist und die dritte Vielzahl (23) von Batteriemodulen (20) abdeckt.

11. Batteriesystem (100) nach irgendeinem der Ansprüche 8 bis 10, weiterhin umfassend
eine vierte Vielzahl von Batteriemodulen (20), die an dem unteren Flansch (13) von unten befestigt sind; und eine untere Abdeckung, die an dem unteren Flansch (13) von unten befestigt ist und die vierte Vielzahl von Batteriemodulen (20) abdeckt.

12. Batteriesystem (100) nach irgendeinem der Ansprüche 8 bis 11, weiterhin umfassend
eine Steuerelektronikgruppe (40), die zwischen dem oberen Flansch (11) und dem unteren Flansch (13) auf wenigstens einer Seite des Stegs (12) angeordnet ist;
wobei die Steuerelektronikgruppe (40) elektrisch und/oder elektronisch an wenigstens eine der ersten Vielzahl (21), der zweiten Vielzahl (22), der dritten Vielzahl (23) und der vierten Vielzahl von Batteriemodulen (20) angeschlossen ist, und
wobei die Steuerelektronikgruppe (40) wenigstens einen Netzanschluss (41) und/oder wenigstens einen Signalport (42) umfasst.

13. Batteriesystem (100) nach irgendeinem der Ansprüche 8 bis 12, weiterhin umfassend
wenigstens eine Frontplatte (51), die an einer Frontseite des Doppel-T-Trägers (10) befestigt ist; und/oder
wenigstens eine Endplatte (52), die an einer Endseite des Doppel-T-Trägers (10) befestigt ist.

14. Batteriesystem (100) nach Anspruch 13,
wobei wenigstens entweder die Frontplatte (51) oder die Endplatte (52) konfiguriert ist, um wenigstens entweder die erste Kühlaussparung (14), die zweite Kühlaussparung (15) und die dritte Kühlaussparung (16) fluidisch an einen externen Kühlkreislauf anzuschließen;
wobei wenigstens entweder die Frontplatte (51) oder die Endplatte (52) konfiguriert ist, um wenigstens zwei der ersten Kühlaussparung (14), der zweiten Kühlaussparung (15) und der dritten Kühlaussparung (16) fluidisch aneinander anzuschließen; und/oder wobei wenigstens die Frontplatte (51) oder die Endplatte (52) konfiguriert ist, um fluidisch abgedichtet wenigstens die erste Kühlaussparung (14), die zweite Kühlaussparung (15) und die dritte Kühlaussparung (16) zu umgeben.

15. Verwendung eines modifizierten Doppel-T-Trägers (10) als Batteriemodulträger (101), wobei der modifizierte Doppel-T-Träger (10) wenigstens eine erste Kühlaussparung (14) umfasst, die in dem oberen Flansch (11) angeordnet ist und sich über die gesamte Länge des oberen Flansches (11) in einer Längsrichtung des Doppel-T-Trägers (10) erstreckt; und wenigstens eine zweite Kühlaussparung (15), die im Steg (12) angeordnet ist und sich über die gesamte Länge des Stegs (12) in einer Längsrichtung des Doppel-T-Trägers (10) erstreckt.

## Revendications

1. Support de module de batterie (101), comprenant :
un profilé en H modifié (10) avec une semelle supérieure (11), une âme (12) et une semelle inférieure (13) ;
au moins une première cavité de réfrigérant (14) disposée dans la semelle supérieure (11) et qui s'étend sur toute la longueur de la semelle supérieure (11) dans une direction longitudinale du profilé en H (10) ; et
au moins une deuxième cavité de réfrigérant (15) disposée dans l'âme (12) et qui s'étend sur toute la longueur de l'âme (12) dans une direction longitudinale du profilé en H (10) .

2. Support de module de batterie (101) selon la revendication 1, comprenant en outre :
au moins une troisième cavité de réfrigérant (16) disposée dans la semelle inférieure (13) et qui s'étend sur toute la longueur de la semelle inférieure (13).

3. Support de module de batterie (101) selon la revendication 1 ou la revendication 2,
dans lequel la semelle supérieure (11) comprend au moins un orifice traversant supérieur (17) relié de manière fluide à l'au moins une première cavité de réfrigérant (14) ; et/ou
dans lequel la semelle inférieure (13) comprend au moins un orifice traversant inférieur relié de manière fluide à l'au moins une troisième cavité de réfrigérant (16) .

4. Support de module de batterie (101) selon l'une quelconque des revendications précédentes,
dans lequel la deuxième cavité de réfrigérant (15) est reliée de manière fluide à au moins l'une de la première cavité de réfrigérant (14) et de la troisième cavité de réfrigérant (16).

5. Support de module de batterie (101) selon l'une quelconque des revendications 2 à 4,
dans lequel l'âme (12) comprend au moins un orifice de réfrigérant configuré pour relier la deuxième cavité de réfrigérant (15) à un circuit de réfrigérant externe.

6. Support de module de batterie (101) selon l'une quelconque des revendications précédentes,
dans lequel la semelle supérieure (11) et la semelle inférieure (13) sont espacées dans une direction de hauteur du profilé en H (10) de sorte qu'une pluralité de modules de batterie (20) puissent être disposés entre la semelle supérieure (11) et la semelle inférieure (13) des deux côtés de l'âme (12).

7. Support de module de batterie (101) selon l'une quelconque des revendications précédentes, dans lequel au moins l'une de la semelle supérieure (11), de l'âme (12) et de la semelle inférieure (13) ou le profilé en H modifié (10) est un profilé en aluminium extrudé.

8. Système de batterie (100), comprenant :
un support de module de batterie (101) selon l'une quelconque des revendications 1 à 7 ;
une première pluralité (21) de modules de batterie (20) disposé entre la semelle supérieure (11) et la semelle inférieure (13) sur un premier côté de l'âme (12) ; et
une deuxième pluralité (22) de modules de batterie (20) disposée entre la semelle supérieure (11) et la semelle inférieure (13) sur un second côté de l'âme (12).

9. Système de batterie (100) selon la revendication 8, comprenant en outre :
un premier capot latéral (31) fixé sur la semelle supérieure (11) et/ou sur la semelle inférieure (13) sur le premier côté de l'âme (12) et recouvrant la première pluralité (21) de modules de batterie (20) ; et
un second capot latéral (32) fixé sur la semelle supérieure (11) et/ou sur la semelle inférieure (13) sur le second côté de l'âme (12) et recouvrant la deuxième pluralité (22) de modules de batterie (20).

10. Système de batterie (100) selon la revendication 8 ou 9, comprenant en outre :
une troisième pluralité (23) de modules de batterie (20) disposée au-dessus de la semelle supérieure (11) ; et un capot supérieur (33) fixé sur la semelle supérieure (11) et recouvrant la troisième pluralité (23) de modules de batterie (20) .

11. Système de batterie (100) selon l'une quelconque des revendications 8 à 10, comprenant en outre :
une quatrième pluralité de modules de batterie (20) montée sur la semelle inférieure (13) par le dessous ; et
un capot inférieur fixé sur la semelle inférieure (13) par le dessous et recouvrant la quatrième pluralité de modules de batterie (20).

12. Système de batterie (100) selon l'une quelconque des revendications 8 à 11, comprenant en outre :
un ensemble électronique de commande (40) disposé entre la semelle supérieure (11) et la semelle inférieure (13) sur au moins un côté de l'âme (12) ;
dans lequel l'ensemble électronique de commande (40) est électriquement et/ou électroniquement relié à au moins l'une de la première pluralité (21), de la deuxième pluralité (22), de la troisième pluralité (23) et de la quatrième pluralité de modules de batterie (20), et
dans lequel l'ensemble électronique de commande (40) comprend au moins un port d'alimentation (41) et/ou au moins un port de signal (42).

13. Système de batterie (100) selon l'une quelconque des revendications 8 à 12, comprenant en outre :
au moins une plaque frontale (51) fixée sur une face avant du profilé en H (10) ; et/ou
au moins une plaque d'extrémité (52) fixée sur une face d'extrémité du profilé en H (10).

14. Système de batterie (100) selon la revendication 13,
dans lequel au moins l'une de la plaque frontale (51) et de la plaque d'extrémité (52) est configurée pour relier de manière fluide au moins l'une de la première cavité de réfrigérant (14), de la deuxième cavité de réfrigérant (15) et de la troisième cavité de réfrigérant (16) à un circuit de réfrigérant externe ;
dans lequel au moins l'une de la plaque frontale (51) et de la plaque d'extrémité (52) est configurée pour relier de manière fluide au moins deux de la première cavité de réfrigérant (14), de la deuxième cavité de réfrigérant (15) et de la troisième cavité de réfrigérant (16) l'une à l'autre ; et/ou
dans lequel au moins l'une de plaque frontale (51) et de la plaque d'extrémité (52) est configurée pour contenir de manière étanche au fluide au moins l'une de la première cavité de réfrigérant (14), de la deuxième cavité de réfrigérant (15) et de la troisième cavité de réfrigérant (16) .

15. Utilisation d'un profilé en H modifié (10) en tant que support de module de batterie (101), le profilé en H modifié (10) comprenant au moins une première cavité de réfrigérant (14) disposée dans la semelle supérieure (11) et s'étendant sur toute la longueur du semelle supérieure (11) dans une direction longitudinale du profilé en H (10) ; et au moins une deuxième cavité de réfrigérant (15) disposée dans l'âme (12) et s'étendant sur toute la longueur de l'âme (12) dans une direction longitudinale du profilé en H (10).
